# FASCICULE DE BREVET EUROPEEN

(11) **EP 2 884 231 B1**
(45) Date de publication et mention de la délivrance du brevet: **07.11.2018**
(21) Numéro de dépôt: 14194643.4
(22) Date de dépôt: 25.11.2014
(51) Int. Cl.: G06T 3/40, G09B 29/10, G01C 23/00, G08G 5/00

(54) **Système de représentation d'indications cartographiques à échelles multiples**
Kartendarstellungssystem mit mehrere Skalen
Multiscale map display system

(30) Priorité: 11.12.2013 FR 1302894
(43) Date de publication de la demande: 17.06.2015
(73) Titulaire: Thales, 92400 Courbevoie (FR)
(72) Inventeur: Cazaux, Patrick, 33187 LE HAILLAN Cedex (FR); Rivaillon, Laurent, 33187 LE HAILLAN Cedex (FR); Leconte, Hervé, 33187 LE HAILLAN Cedex (FR)
(74) Mandataire: Bréda, Jean-Marc

(56) Documents cités:
- EP-A1- 2 637 152
- EP-A2- 2 533 015
- US-A1- 2010 250 030
- Luke Mahe ET AL: "Too Many Markers! | Google Maps APIs | Google Developers", , 1 December 2010 (2010-12-01), XP055288759, Retrieved from the Internet: URL:https://developers.google.com/maps/art icles/toomanymarkers#markermanager [retrieved on 2016-07-15]
- Gabriel Svennerberg: "Google Maps API 3", , 31 December 2010 (2010-12-31), pages 201-205, XP055288778, Retrieved from the Internet: URL:http://maps.unomaha.edu/Peterson/GEOG8 670_Spring15/Google_Maps_v3.pdf [retrieved on 2016-07-15]

## Description

Le domaine général de l'invention est celui des systèmes de gestion des missions aéronautiques comportant un affichage cartographique. Le domaine plus particulier est celui de la gestion de l'affichage et de la représentation cartographique des différentes données en cas de changement d'échelle.

Un tel système d'affichage cartographique pour aéronef est décrit par exemple dans le document EP 2 533 015 A2.

De plus, un système de représentation d'indications cartographiques dans lequel des données cartographiques sont associées à des représentations symboliques ayant chacune un attribut de visibilité dépendant de l'échelle d'affichage est décrit dans le document "Google Maps API 3" disponible à http:// maps.unomaha.edu/Peterson/GEOG8670_Spring15/Google_Maps_v3.pdf.

Ces systèmes sont utilisés au sol pour réaliser des préparations de mission ou à bord des aéronefs sur des systèmes embarqués fonctionnant en temps réel. Ils permettent alors la préparation, le suivi ou la modification de la mission.

Ces systèmes ont pour objectif d'apporter une vision d'ensemble claire et cohérente de la situation de l'aéronef dans son environnement. Les principales informations à afficher sont les données de navigation :
- Aéroports et héliports ;
- Balises de navigation de type NDB (Non Directional Beacon), VOR (VHF Omnidirectional Range), DME (Distance Measuring Equipment), VORDME, TACAN (TACtical Air Navigation), VORTAC, ILS (Instrument Landing System) ;
- Points de passage aéronautiques ou « Waypoints » ;
- Procédures de type routes aériennes ou « airways », SID (Standard Instrument Departure), STAR (Standard Terminal Arrivai Route), APP (Approches) ;
- Secteurs aériens ou « airspaces ».

Toutes les données ci-dessus sont présentes dans les bases de données sous des formats standardisés comme le format ARINC 424 ou « Navigation System Data Base Standard ». Les données concernant les obstacles ponctuels, linéaires ou surfaciques sont également critiques pour les systèmes aéronautiques. Ces données d'obstacles sont également présentes dans des bases de données.

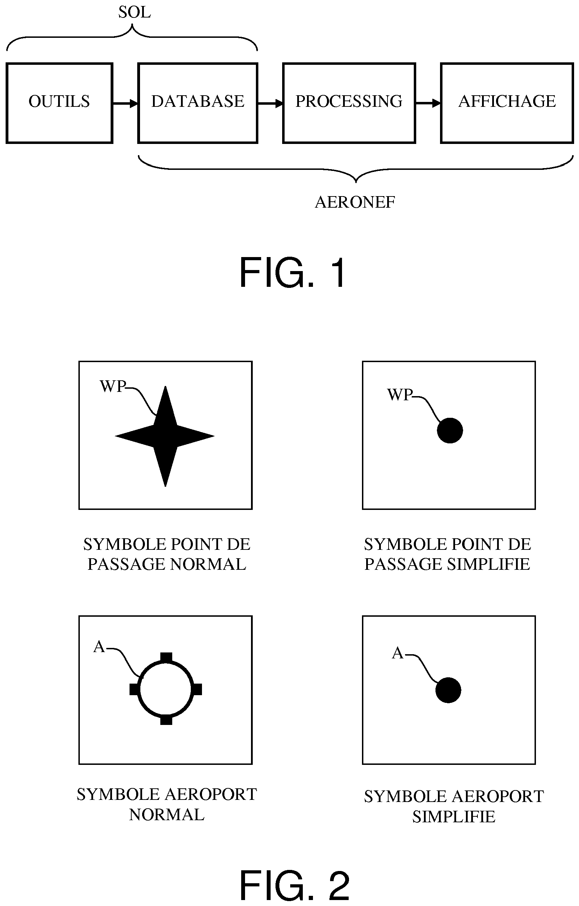

Un système de gestion de missions aéronautiques comporte essentiellement quatre parties principales représentées en figure 1 et qui sont :
- Un outil de préparation de la base de données noté « outils » ;
- La base de données proprement dit ou « Database » ou « BDD » ;
- Un calculateur ou « Processing » dont les fonctions sont de sélectionner les données utiles destinées à être afficher en fonction du terrain survolé, de l'échelle sélectionnée ainsi que d'un certain nombre de facteurs dépendant du vol ou de la mission ;
- Enfin, un ou plusieurs dispositifs de visualisation affichant les données sélectionnées notés « Affichage » sur la figure 1.

La mise en place d'un tel système doit répondre à deux objectifs principaux. L'ergonomie de l'interface doit assurer la meilleure lisibilité possible des données sélectionnées ainsi que leur cohérence et la continuité d'affichage lorsque l'échelle change. Le système doit fonctionner en temps réel avec un espace mémoire limité. Il est donc nécessaire d'optimiser le volume d'espace disque nécessaire et la charge de travail du calculateur. La tenue de ces objectifs pose un certain nombre de problèmes détaillés ci-dessous.

Les données à afficher sont très nombreuses. A des échelles importantes, celles correspondant à un pays ou une région, il n'est pas envisageable d'afficher toutes les données car l'information trop importante n'est plus lisible.

Pour favoriser une bonne compréhension d'un affichage complexe, il est nécessaire d'assurer une bonne continuité d'affichage lorsque l'utilisateur change d'échelle ou de représentation. Ce changement peut se faire continûment ou par saut. Dans tous les cas, le système doit afficher, à chaque étape intermédiaire, un affichage lisible et cohérent. La continuité d'affichage doit également permettre d'éviter les effets de « clignotement », c'est-à-dire qu'un élément ou une donnée qui disparaît à une certaine échelle ne doit plus réapparaître à une échelle supérieure.

Pour résoudre ces différents problèmes, Les solutions existantes sont de deux types. On peu réaliser un filtrage d'informations soit au niveau de la BDD soit au niveau du processing.

Le filtrage d'informations au niveau de la BDD est aujourd'hui le standard. Cette solution est appliquée dans toutes les présentations industrielles et grand public. Elle consiste à construire plusieurs databases avec des niveaux de précision des informations différents. Chaque BDD est construite pour permettre un rendu optimal à une échelle donnée. Dynamiquement, le système cartographique utilise la base de données optimale la plus proche de l'échelle courante.

Cette solution présente les inconvénients suivants :
- Absence de continuité d'affichage pour des changements d'échelle continus. Le passage d'une base de données à l'autre entraine un changement brutal de représentation incompatible du besoin de continuité dans l'affichage. Le passage d'une base de données à une autre nécessite généralement une durée ou latence. Le traitement transitoire associé qui correspond à un effacement complet de l'image ou à une image incomplète ou à un blocage de l'interaction avec le système renforce la sensation de discontinuité dans l'affichage ;
- Important volume de mémoire nécessaire. La solution nécessite de construire plusieurs bases de données, et donc de les dupliquer. Le volume de mémoire nécessaire augmente en conséquence. Cela n'est pas pénalisant pour les solutions accédant à une BDD via une interface « Web ». Par contre, ce problème est très pénalisant pour une base de données embarquée autonome présente dans un système avionique.

Dans le filtrage d'informations au niveau du processing, le système calcule dynamiquement la quantité optimale d'éléments à afficher à une échelle donnée en fonction de règles de filtrage permettant de sélectionner lesdits éléments. On parle aussi de « decluttering ». A titre d'exemples de règles de filtrage dynamique, on citera :
- Ne pas dépasser un nombre maximal d'éléments affichés par type d'objet ;
- Ne plus afficher certains objets au-dessus d'une certaine échelle ;
- Etablir une hiérarchie des priorités des objets en fonction de leur type ;
- Etablir une hiérarchie des priorités des objets en fonction de leur distance à l'avion.

Cette dernière solution présente trois inconvénients détaillés ci-dessous :
- Complexité des règles de « decluttering ». Les règles de decluttering « avancées » comme, par exemple, la détection de chevauchement graphique d'objets proches, nécessitent des calculs complexes réalisés dynamiquement. La mise en oeuvre dynamique de règles avancées est peu performante sur du matériel grand public haut de gamme et totalement incompatible des calculateurs avioniques actuels.
- Processus de mise à jour complexe. Pour faire évoluer une représentation liée à une règle, il est systématiquement obligatoire de modifier le logiciel.
- Continuité d'affichage perfectible. Pour résoudre les problèmes évoqués ci-dessus, les solutions existantes mettent en oeuvre un compromis qui se fait généralement au détriment de la continuité d'affichage.

Il est à noter que certaines solutions mises en oeuvre pour les applications grand public combinent les deux méthodes pour chercher à réduire les problèmes rencontrés, sans toutefois totalement les résoudre.

L'objet de l'invention est d'associer à chaque représentation de l'objet une échelle dépendant de l'objet et à partir de laquelle ladite représentation est affichée. Cette échelle est préalablement calculée.

Selon l'invention chaque donnée comporte au moins deux représentations symboliques avec deux échelles différentes associées de façon à créer des paliers de représentation.

Plus précisément, l'invention a pour objet un système de représentation d'indications cartographiques pour aéronef, ledit système comportant au moins une base de données cartographique, un calculateur graphique, un dispositif d'affichage et des moyens de sélection de l'échelle des données cartographiques affichées, chaque donnée cartographique comportant une première représentation symbolique, configuré tel que, à la première représentation symbolique est associée une première échelle dépendant de ladite donnée cartographique et,
lorsque les moyens de sélection sélectionnent une échelle supérieure ou égale à la première échelle, la première représentation est affichée sur le dispositif d'affichage,
lorsque les moyens de sélection sélectionnent une échelle inférieure strictement à la première échelle, la première représentation n'est plus affichée sur le dispositif d'affichage,
caractérisé en ce que chaque donnée cartographique comporte au moins une seconde représentation symbolique associée à une seconde échelle inférieure à la première échelle, ladite seconde échelle dépendant de ladite donnée cartographique telle que :
lorsque les moyens de sélection sélectionnent une échelle comprise entre la première échelle et la seconde échelle, la seconde représentation est affichée sur le dispositif d'affichage,
lorsque les moyens de sélection sélectionnent une échelle inférieure strictement à la seconde échelle, le symbole n'est plus affiché sur le dispositif d'affichage.

Avantageusement, à chaque donnée est associé un ordre de priorité, la détermination de la première échelle et/ou de la seconde échelle étant faite en fonction de cet ordre de priorité.

Avantageusement, à partir d'une échelle déterminée, toutes les données correspondant à un même ordre de priorité déterminé sont affichées sur le dispositif d'affichage avec la même première représentation symbolique ou la même seconde représentation symbolique.

Avantageusement, à partir d'une échelle déterminée, toutes les données correspondant à un même ordre de priorité déterminé ne sont plus affichées sur le dispositif d'affichage.

Avantageusement, une première donnée étant disposée à un premier emplacement, la détermination de la première échelle et/ou de la seconde échelle de ladite première donnée est faite en fonction de la distance qui sépare ce premier emplacement du plus proche emplacement d'une seconde donnée.

Avantageusement, les données étant regroupées en catégories, la première échelle et/ou la seconde échelle sont identiques pour toutes les données d'une même catégorie.

Avantageusement, la détermination de la première échelle et/ou de la seconde échelle dépendent de la sélection ou de l'absence de sélection de données d'une catégorie différente.

L'invention sera mieux comprise et d'autres avantages apparaîtront à la lecture de la description qui va suivre donnée à titre non limitatif et grâce aux figures annexées parmi lesquelles :
La figure 1 déjà commentée représente le synoptique d'un système de gestion de mission ;
La figure 2 représente pour deux données différentes leurs représentations symboliques respectives ;
La figure 3 représente la gestion des échelles associées aux représentations symboliques pour deux données proches de priorité identiques ;
Les figures 4 et 5 représentent la gestion des échelles associées aux représentations symboliques pour deux données proches de priorité différente à deux échelles différentes.

Dans la suite du texte, le terme « échelle » désigne le rapport entre la mesure d'un objet réel et la mesure de sa représentation cartographique. Elle est exprimée par une valeur numérique qui est généralement sous forme de fraction. On a adopté la convention suivante. Ainsi, une échelle au 1/100 000 signifie qu'un centimètre sur la carte correspond à un kilomètre sur le terrain. L'expression « à grande échelle » désigne donc une échelle qui se rapproche de l'échelle 1/1. Au contraire, « à petite échelle » désigne une échelle de valeur élevée qui s'éloigne de l'échelle 1/1 et qui correspond à une représentation de taille réduite. Par conséquent, à une échelle supérieure à une autre échelle, des détails plus fins apparaissent et la zone cartographique affichée diminue.

Le système de visualisation embarqué sur aéronef selon l'invention comporte une base de données cartographique, un calculateur graphique, au moins un dispositif d'affichage et des moyens de sélection de l'échelle des données cartographiques affichées.

Dans les aéronefs modernes, le système comporte généralement plusieurs dispositifs de visualisation disposés dans le cockpit affichant les paramètres nécessaires au pilotage et à la navigation et plus généralement, à l'accomplissement de la mission. Il existe différentes façons de représenter le terrain survolé. On peut le représenter par une vue cartographique bidimensionnelle ou tridimensionnelle. Comme il a été dit, ces vues comportent nécessairement des données de navigation.

Le pilote peut sélectionner l'échelle du terrain survolé en fonction de phase de vol. La sélection peut se faire soit au moyen d'un curseur graphique contrôlé par un CCD, acronyme de « Cursor Control Device », équivalent de la souris informatique, soit directement sur l'écran de visualisation s'il est équipé d'une dalle tactile au moyen de la sélection d'une fonction ou en effectuant un geste approprié.

La sélection de l'échelle entraîne la sélection des données affichées dans la mesure où il est impossible d'afficher à toutes les échelles, toutes les données possibles contenues dans la base de données.

Dans le système selon l'invention, chaque donnée cartographique comporte deux représentations symboliques différentes. A titre d'exemples, la figure 2 représente, pour deux types de données, la première et la seconde représentation que l'on a noté respectivement symbole normal et symbole simplifié. La première donnée représente un point de passage aéronautique WP ou « waypoint ». Sa représentation symbolique normale est une croix noire à quatre branches en pointe et sa représentation symbolique simplifiée est un cercle noir simple. La seconde donnée représente un aéroport A. Sa représentation symbolique normale est un cercle comportant quatre protubérances carrées disposées symétriquement et sa représentation symbolique simplifiée est également un cercle noir simple. Ainsi, en changeant d'échelle, on passe successivement de la première représentation à la seconde, puis à l'absence de représentation à petite échelle.

Une première échelle est associée à la première représentation symbolique et une seconde échelle inférieure à la première échelle est associée à la seconde représentation symbolique. Elles sont agencées de façon que :
lorsque les moyens de sélection sélectionnent une échelle supérieure ou égale à la première échelle, la première représentation est affichée sur le dispositif d'affichage,
lorsque les moyens de sélection sélectionnent une échelle comprise entre la première échelle et la seconde échelle, la seconde représentation est affichée sur le dispositif d'affichage,
lorsque les moyens de sélection sélectionnent une échelle inférieure strictement à la seconde échelle, le symbole n'est plus affiché sur le dispositif d'affichage.

Dans la suite, on note la première échelle et la seconde échelle « échelles de transition ». Il peut y avoir plusieurs échelles de transition associées à une même donnée.

On comprend l'intérêt de cette disposition. Le choix des échelles de transition est effectué au sol par l'outil de préparation de bases de données. Les critères de sélection peuvent être complexes dans la mesure où le temps d'attribution d'une échelle à une donnée particulière est sans importance. Au final, la base de données cartographiques est unique et ne comporte, pour chaque donnée qu'une ou deux indications d'échelle supplémentaires ou plus si nécessaire, ce qui n'augmente pas considérablement la taille mémoire de la base de données.

En vol, lorsque le pilote sélectionne une échelle dite échelle active, pour déterminer la représentation qui doit être sélectionnée, le calculateur graphique compare juste l'échelle active avec les échelles associées à chaque donnée pour sélectionner la représentation qui sera affichée. Le mode de sélection est donc très simple et très rapide.

Comme il a été dit, les critères de sélection peuvent être complexes pour déterminer les échelles de transition. Elles sont, bien entendu, d'abord fonction de l'échelle active sélectionnée par le pilote. Mais, d'autres critères peuvent intervenir détaillés ci-dessous.

Le premier critère est un ordre de priorité. A chaque donnée est associé un ordre de priorité, la détermination de la première échelle et/ou de la seconde échelle étant faite en fonction de cet ordre de priorité. Il est possible de préciser ce critère de telle sorte qu'à partir d'une échelle déterminée, toutes les données correspondant à un même ordre de priorité déterminé sont affichées sur le dispositif d'affichage avec la même première représentation symbolique ou la même seconde représentation symbolique. De la même façon, on peut décider qu'à partir d'une échelle déterminée, toutes les données correspondant à un même ordre de priorité déterminé ne sont plus affichées sur le dispositif d'affichage.

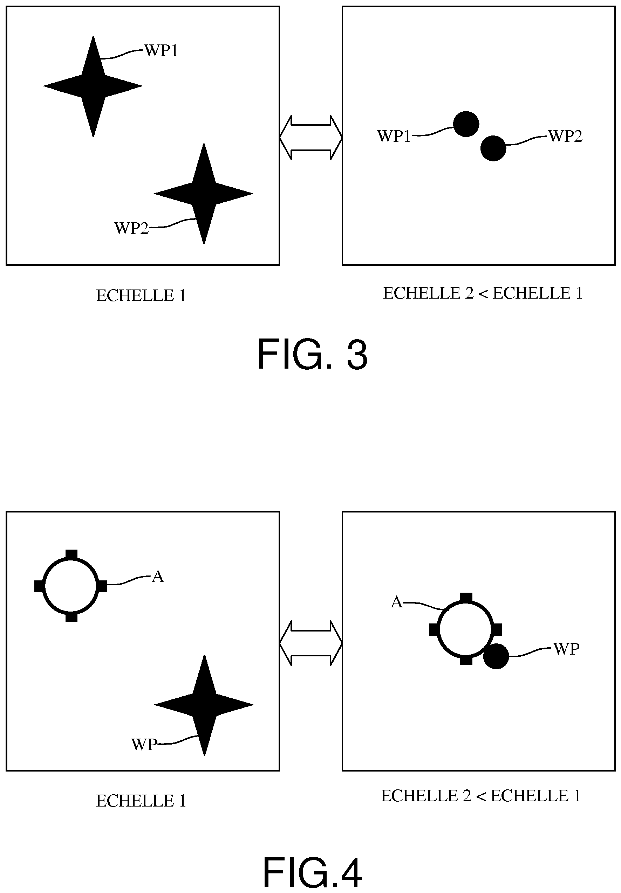

Le second critère est un critère de densités de données. A une échelle donnée, plusieurs données peuvent être suffisamment proches les une des autres pour que leurs représentations symboliques se chevauchent, rendant leur lecture difficile, voire impossible. Dans ce cas, une première donnée étant disposée à un premier emplacement, la détermination de la première échelle et/ou de la seconde échelle de ladite première donnée est faite en fonction de la distance qui sépare ce premier emplacement du plus proche emplacement d'une seconde donnée. Ainsi, sur la figure 3, lorsque deux premières représentations de « waypoint » WP1 et WP2 figurées par deux croix à quatre branches en pointe à une échelle 1 sont trop proches l'une de l'autre à une échelle 2 inférieure à l'échelle 1, elles sont toutes deux remplacées à cette échelle 2 par leurs représentations simplifiées, en l'occurrence un cercle noir, les deux cercles étant disjoints et donc parfaitement identifiables. Le critère faisant passer de la première représentation symbolique à la seconde dépend de la forme de cette représentation. Un critère possible de changement d'échelle peut être qu'au-delà de 20% de surface commune, la représentation des deux données concernées change.

Dans un second temps, si l'échelle diminue encore, les deux cercles correspondant aux deux waypoints ne sont plus affichés que par un seul point dès que leurs représentations se confondent.

Il est également possible, dans le cas de données proches de tenir compte de leur ordre de priorité. Ainsi, sur la figure 4, on a représenté à une première échelle deux symboles, le premier figurant un aéroport A et le second un « waypoint » WP. L'affichage de l'aéroport A est prioritaire sur celui du waypoint. Aussi, lorsque les deux symboles se confondent à une échelle 2 plus faible, le symbole du waypoint passe de la première représentation à la seconde alors que le symbole de l'aéroport qui est prioritaire ne change pas.

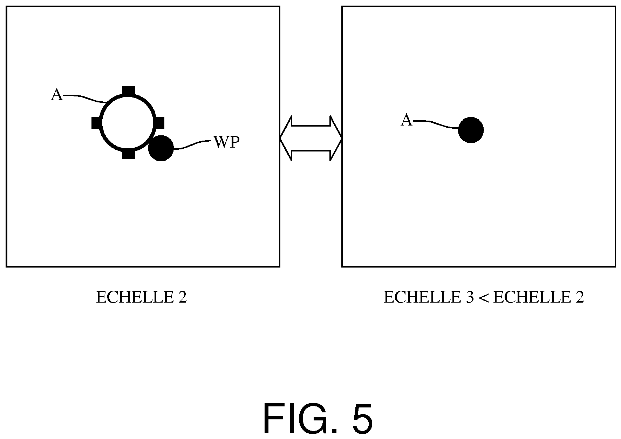

A une échelle 3 plus faible encore, illustrée en figure 5, le symbole du waypoint disparaît alors que le symbole de l'aéroport A passe de la première représentation à la seconde représentation.

Enfin, si l'utilisateur décide de ne pas afficher une certaine catégorie de données, la détermination de la première échelle et/ou de la seconde échelle pour les catégories de données encore affichées ou affichables peuvent dépendre de la sélection ou de l'absence de sélection de la catégorie de données non sélectionnée.

Bien entendu, la liste des critères ci-dessus n'est pas exhaustive. D'autres critères de sélection peuvent être mis en oeuvre pour déterminer les échelles de transition. Ils restent dans le cadre de cette invention, telle que définie par les revendications annexées.

## Revendications

1. Système de représentation d'indications cartographiques pour aéronef, ledit système comportant au moins une base de données cartographique, un calculateur graphique, un dispositif d'affichage et des moyens de sélection de l'échelle des données cartographiques affichées, chaque donnée cartographique comportant une première représentation symbolique, configuré tel que, la première représentation symbolique est associée une première échelle dépendant de ladite donnée cartographique et,
lorsque les moyens de sélection sélectionnent une échelle supérieure ou égale à la première échelle, la première représentation est affichée sur le dispositif d'affichage,
lorsque les moyens de sélection sélectionnent une échelle inférieure strictement à la première échelle, la première représentation n'est plus affichée sur le dispositif d'affichage,
**caractérisé en ce que** chaque donnée cartographique comporte au moins une seconde représentation symbolique, différente de la première représentation symbolique, associée à une seconde échelle inférieure à la première échelle, ladite seconde échelle dépendant de ladite donnée cartographique telle que :
lorsque les moyens de sélection sélectionnent une échelle comprise entre la première échelle et la seconde échelle, la seconde représentation est affichée sur le dispositif d'affichage,
lorsque les moyens de sélection sélectionnent une échelle inférieure strictement à la seconde échelle, le symbole n'est plus affiché sur le dispositif d'affichage.

2. Système de représentation d'indications cartographiques selon la revendication 1, **caractérisé en ce qu'**à chaque donnée est associée un ordre de priorité, la détermination de la première échelle et/ou de la seconde échelle étant faite en fonction de cet ordre de priorité.

3. Système de représentation d'indications cartographiques selon la revendication 2, **caractérisé en ce que**, à partir d'une échelle déterminée, toutes les données correspondant à un même ordre de priorité déterminé sont affichées sur le dispositif d'affichage avec la même première représentation symbolique ou la même seconde représentation symbolique.

4. Système de représentation d'indications cartographiques selon la revendication 2, **caractérisé en ce que**, à partir d'une échelle déterminée, toutes les données correspondant à un même ordre de priorité déterminé ne sont plus affichées sur le dispositif d'affichage.

5. Système de représentation d'indications cartographiques selon la revendication 1, **caractérisé en ce que**, une première donnée étant disposée à un premier emplacement, la détermination de la première échelle et/ou de la seconde échelle de ladite première donnée est faite en fonction de la distance qui sépare ce premier emplacement du plus proche emplacement d'une seconde donnée.

6. Système de représentation d'indications cartographiques selon la revendication 1, **caractérisé en ce que**, les données étant regroupées en catégories, la première échelle et/ou la seconde échelle sont identiques pour toutes les données d'une même catégorie.

7. Système de représentation d'indications cartographiques selon la revendication 6, **caractérisé en ce que**, la détermination de la première échelle et/ou de la seconde échelle dépendent de la sélection ou de l'absence de sélection de données d'une catégorie différente.

## Patentansprüche

1. System zur Darstellung kartographischer Hinweise für Luftfahrzeug, wobei das System mindestens eine kartografische Datenbank, einen grafischen Rechner, eine Anzeigevorrichtung und Auswahlmittel des Maßstabs von angezeigten kartografischen Daten umfasst, wobei die einzelnen kartografischen Daten eine erste symbolische Darstellung umfassen,
die so konfiguriert ist, dass
die erste symbolische Darstellung mit einem ersten Maßstab assoziiert ist, der von den einzelnen kartografischen Daten abhängt und,
wenn die Auswahlmittel einen Maßstab auswählen, der höher als oder gleich wie der erste Maßstab ist, die erste Darstellung an der Anzeigevorrichtung angezeigt wird,
wenn die Auswahlmittel einen streng niedrigeren Maßstab als den ersten Maßstab auswählen, die erste Darstellung nicht mehr an der Anzeigevorrichtung angezeigt wird,
**dadurch gekennzeichnet, dass** die einzelnen kartografischen Daten mindestens eine zweite symbolische Darstellung umfassen, die sich von der ersten symbolischen Darstellung unterscheidet, die mit einem zweiten Maßstab assoziiert ist, der niedriger als der erste Maßstab ist, wobei der zweite Maßstab von den einzelnen kartografischen Daten abhängt, sodass:
wenn die Auswahlmittel einen Maßstab auswählen, der zwischen dem ersten Maßstab und dem zweiten Maßstab liegt, die zweite Darstellung an der Anzeigevorrichtung angezeigt wird,
wenn die Auswahlmittel einen streng niedrigeren Maßstab als den zweiten Maßstab auswählen, das Symbol nicht mehr an der Anzeigevorrichtung angezeigt wird.

2. System zur Darstellung kartographischer Hinweise nach Anspruch 1, **dadurch gekennzeichnet, dass** die einzelnen Daten mit einer Prioritätsordnung assoziiert sind, wobei die Bestimmung des ersten Maßstabs und/oder des zweiten Maßstabs abhängig von dieser Prioritätsordnung erfolgt.

3. System zur Darstellung kartographischer Hinweise nach Anspruch 2, **dadurch gekennzeichnet, dass** ab einem bestimmten Maßstab alle Daten, die einer selben bestimmten Prioritätsordnung entsprechen, an der Anzeigevorrichtung mit derselben ersten symbolischen Darstellung oder derselben zweiten symbolischen Darstellung angezeigt werden.

4. System zur Darstellung kartographischer Hinweise nach Anspruch 2, **dadurch gekennzeichnet, dass** ab einem bestimmten Maßstab alle Daten, die einer selben bestimmten Prioritätsordnung entsprechen, nicht mehr an der Anzeigevorrichtung angezeigt werden.

5. System zur Darstellung kartographischer Hinweise nach Anspruch 1, **dadurch gekennzeichnet, dass**, indem ein erstes Datenelement an einer ersten Stelle angeordnet ist, die Bestimmung des ersten Maßstabs und/oder des zweiten Maßstabs des ersten Datenelements abhängig von dem Abstand erfolgt, der diese erste Stelle von der nächstliegenden Stelle eines zweiten Datenelements trennt.

6. Kartendarstellungssystem nach Anspruch 1, **dadurch gekennzeichnet, dass** dadurch, dass die Daten in Kategorien zusammengefasst sind, der erste Maßstab und/oder der zweite Maßstab für alle Daten einer selben Kategorie identisch sind.

7. Kartendarstellungssystem nach Anspruch 6, **dadurch gekennzeichnet, dass** die Bestimmung des ersten Maßstabs und/oder des zweiten Maßstabs von der Auswahl oder dem Fehlen einer Auswahl von Daten einer anderen Kategorie abhängt.

## Claims

1. A system for representing cartographic indications for an aircraft, said system comprising at least one cartographic database, one graphical computer, one display device and means for selecting the scale of the displayed cartographic data, each item of cartographic data comprising a first symbolic representation, configured such that the first symbolic representation is associated with a first scale depending on said item of cartographic data and,
when the selection means select a scale that is greater than or equal to the first scale, the first representation is displayed on the display device,
when the selection means select a scale that is strictly smaller than the first scale, the first representation is no longer displayed on the display device,
**characterised in that** each item of cartographic data comprises at least one second symbolic representation, different from the first symbolic representation, associated with a second scale smaller than the first scale, said second scale depending on said cartographic data such that,
when the selection means select a scale between the first scale and the second scale, the second representation is displayed on the display device,
when the selection means select a scale strictly smaller than the second scale, the symbol is no longer displayed on the display device.

2. The system for representing cartographic indications as claimed in claim 1, **characterised in that** each item of data is associated with an order of priority, with determining the first scale and/or the second scale being carried out as a function of said order of priority.

3. The system for representing cartographic indications as claimed in claim 2, **characterised in that**, based on a determined scale, all the data corresponding to the same determined order of priority is displayed on the display device with the same first symbolic representation or the same second symbolic representation.

4. The system for representing cartographic indications as claimed in claim 2, **characterised in that**, based on a determined scale, all the data corresponding to the same determined order of priority is no longer displayed on the display device.

5. The system for representing cartographic indications as claimed in claim 1, **characterised in that**, with a first item of data being disposed at a first location, determining the first scale and/or the second scale of said first item of data is carried out as a function of the distance that separates this first location from the closest location of a second item of data.

6. The system for representing cartographic indications as claimed in claim 1, **characterised in that**, with the data being grouped in categories, the first scale and/or the second scale are identical for all the data of the same category.

7. The system for representing cartographic indications as claimed in claim 6, **characterised in that**, determining the first scale and/or the second scale depends on the selection or absence of selection of data from a different category.
